# EUROPÄISCHE PATENTSCHRIFT

(11) **EP 3 544 161 B1**
(45) Veröffentlichungstag und Bekanntmachung des Hinweises auf die Patenterteilung: **15.04.2020**
(21) Anmeldenummer: 18162757.1
(22) Anmeldetag: 20.03.2018
(51) Int. Cl.: H02K 15/06

(54) **VERFAHREN UND VORRICHTUNG ZUM EINBRINGEN EINER WELLENWICKELMATTE IN DEN ROTOR ODER STATOR EINER ELEKTRISCHEN MASCHINE, INSBESONDERE IN EIN STATORBLECHPAKET**
METHOD AND DEVICE FOR INTRODUCING A WAVE WINDING MAT INTO THE ROTOR OR STATOR OF AN ELECTRICAL MACHINE, IN PARTICULAR A LAMINATED STATOR CORE
PROCÉDÉ ET APPAREIL D'INTRODUCTION D'UNE MATTE D'ENROULEMENT ONDULÉ DANS LE ROTOR OU DANS LE STATOR D'UNE MACHINE ÉLECTRIQUE, EN PARTICULIER DANS UN PAQUET DE TÔLES STATORIQUES

(43) Veröffentlichungstag der Anmeldung: 25.09.2019
(73) Patentinhaber: Aumann Espelkamp GmbH, 32339 Espelkamp (DE)
(72) Erfinder: SMULCZYNSKI, Marc, 32369 Rahden (DE); HAGEDORN, Jürgen, 32312 Lübbecke (DE); LÜTTGE, Wolfgang, 31787 Hameln (DE)
(74) Vertreter: Schober, Mirko

(56) Entgegenhaltungen:
- EP-A1- 3 182 569
- WO-A1-2017/013523
- FR-A1- 3 020 199
- US-A1- 2004 261 256
- US-A1- 2009 267 441
- US-A1- 2011 167 622

## Beschreibung

Die Erfindung betrifft ein Verfahren zum Einbringen einer Wellenwickelmatte in Rotor oder Stator einer elektrischen Maschine, insbesondere in ein Statorblechpaket nach dem Oberbegriff des Anspruchs 1 sowie eine Vorrichtung hierfür.

Bei der Herstellung von elektrischen Bauteilen für elektrische Maschinen, insbesondere Rotoren und Statoren, wird eine Wellenwickelmatte, die in der Regel aus einer Mehrzahl Wellenwicklungen besteht, in das elektrische Bauteil eingebracht. Dabei müssen die geraden Abschnitte zwischen den Wickelköpfen der Wellenwickelmatte in die Nuten des Rotors bzw. Stators eingelegt werden. Dazu muss die Wellenwickelmatte aus der flachen Form in einen Radius gezwängt werden. Nun ist eine Wellenwickelmatte, die aus einer Mehrzahl Drähten besteht, ein Gebilde, welches aufgrund der Spannung der Drähte gegen diesen Einbringprozess an arbeitet. Um mit der Eigenspannung der Wellenwickelmatte klarzukommen, ist in der Vergangenheit bereits ein Verfahren entwickelt worden, bei welchem eine mechanische Vereinzelung über eine Vereinzelungseinrichtung und ein Eindrücken in die Nuten mittels mechanischen Schiebern erfolgt.

So offenbart die WO 2017 013 523 A1 ein Einlegeverfahren für eine Wellenwickelmatte, bei der die einzelnen Drahtelemente mittels eines Zahnrades auf einen gewünschten Abstand gebracht werden und anschließend durch einen Schlitz in einer Führung, die in axialer Richtung unmittelbar neben dem Rotor oder Stator angeordnet ist, zu den Nuten geführt und dort eingeschoben. Nachteil hierbei ist, dass es bei Erschütterungen der Wellenwickelmatten zu Verschiebungen von Drahtelementen zueinander kommen kann, was zumindest einige Drahtelemente verschieben kann, so dass die gewollten Abstände beim Einschieben nicht mehr passen und die Drähte an die Polzähne stoßen und dort beschädigt werden können.

EP 3 182 569 A1 offenbart eine Vorrichtung und ein Verfahren, bei dem die Elemente der Wellenwickelmatte in die einzelnen Nuten geschoben werden. Eine Eindrückvorrichtung drückt die entsprechenden Drahtelemente in die Nuten. Zuvor hat eine in Bewegungsrichtung der Wellenwickelmatte vor der Eindrückvorrichtung angeordnete Vereinzelungshilfe die entsprechenden Drahtelemente von der Wickelmatte abgetrennt, damit diese beim Einschieben den Rest der Wellenwickelmatte nicht nachziehen. Nachteil einer derartigen Vorrichtung ist, dass die einzuschiebenden Drahtelemente oder deren Verbindungsstücke mit weiteren Drahtelementen der Wellenwickelmatte beim Einschieben gedehnt und damit gestresst werden können.

Trotzder bekannten Techniken ist die Eigenspannung der Wellenwickelmatte immer noch relativ hoch, sodass es beim Einbringen zu Beschädigungen des Wickeldrahtes der Wickelmatte kommen kann, wenn zum Beispiel der Draht an den zwischen den Nuten des elektrischen Bauteils befindlichen metallischen Vorsprüngen reibt.

Ein weiteres Problem, welches auftritt, ist, dass die Wellenwickelmatte bei bestimmten elektrischen Bauteilen mehrlagig eingebracht werden muss. Das bedeutet, dass die Wellenwickelmatte in mehreren Lagen aufgerollt wird. Je mehr Lagen in dem elektrischen Bauteil unterzubringen sind, desto höher wird die mechanische Spannung innerhalb der Wellenwickelmatte von Lage zu Lage, wenn einzelne Wicklungen sukzessive in benachbarte Nuten eingebracht werden und der Abstand der Wellenleiter zueinander konstant ist.

Aufgabe der vorliegenden Erfindung ist es daher, ein Verfahren der eingangs genannten Art sowie eine Vorrichtung hierfür zu schaffen, mit deren Hilfe die oben angesprochenen Nachteile weitgehend vermieden werden können.

Gelöst wird die Aufgabe durch ein Verfahren zum Einbringen einer Wickelmatte mit den Merkmalen des Anspruchs 1 und durch eine Vorrichtung zum Einbringen einer Wellenwicklung mit den Merkmalen des Anspruchs 8. Bevorzugte Ausführungsformen werden in den Unteransprüchen offenbart.

Das erfindungsgemäße Verfahren zum Einbringen einer Wellenwickelmatte in den Rotor oder Stator einer elektrischen Maschine, insbesondere in ein Statorblechpaket, weist folgende Schritte auf:
i) Bereitstellen einer aus einer oder einer Mehrzahl Wellenwicklungen gebildeten Wellenwickelmatte;
ii) Bereitstellen eines mit der Wellenwickelmatte zu bestückenden Rotors oder Stators, welcher eine Mehrzahl in Umfangsrichtung entlang der Innen- oder Außenseite des Rotors oder Stators angeordnete und über Zwischenräume beabstandete Polzähne aufweist,
iii) Einbringen der Wellenwicklung durch sukzessives Anordnen von zwischen den Wickelköpfen der Wellenwickelmatte befindlichen Drahtabschnitten in die Zwischenräume.

Vor dem Schritt iii) werden dabei an einer Stirnseite des Rotors oder Stators über die Polzähne radial vorstehende Drahtvereinzelungselemente angeordnet, wobei im Bereich der Wickelköpfe der Wellenwickelmatte eine, insbesondere als Formkufe ausgebildete, Eindrückeinrichtung zugestellt wird. Dabei werden Rotor oder Stator und Eindrückeinrichtung relativ zueinander bewegt, wobei die Eindrückeinrichtung eine Kontaktfläche aufweist, an welcher Bereiche der Wickeldrähte - z.B. die Drahtabschnitte und/oder Wickelkopfe - der Wellenwickelmatte entlang gleiten, von den Drahtvereinzelungselementen vereinzelt und infolge der Relativbewegung von Rotor oder Stator und Eindrückeinrichtung in die Zwischenräume gedrückt werden. Da es um die Relativbewegung zwischen Rotor oder Stator und der Wellenwickelmatte auf der einen Seite und der Eindrückeinrichtung auf der anderen Seite geht, ist es auch denkbar, dass sich die Eindrückeinrichtung gegenüber eines feststehenden Rotors oder Stators bewegt.

Der Rotor oder Stator wird mit einer aus mehreren Wellenwicklungen gebildete Wellenwickelmatte bestückt, indem die beiden zusammengeführt werden. Dabei werden die einzelnen Polzähne mit Drahtvereinzelungselementen bestückt, die die in die Zwischenräume einzuführenden Drahtabschnitte an den Polzähnen vorbei leiten, damit die Drahtabschnitte beim Einführen nicht an den möglicherweise scharfen Kanten der Polzähne beschädigt werden. Hierbei werden die Wellenwickelmatte und der Rotor oder Stator simultan in einer Drehrichtung bewegt und an einer feststehenden oder unabhängig von dem Rotor oder Stator bewegten Eindrückeinrichtung vorbeigeführt. Diese Eindrückeinrichtung hat eine Kontaktfläche, an der die vereinzelten Drahtabschnitte entlang gleiten und mit der die Drahtabschnitte in die Zwischenräume gedrückt werden. Da es um die Relativbewegung zwischen Rotor oder Stator und der Wellenwickelmatte auf der einen Seite und der Eindrückeinrichtung auf der anderen Seite geht, ist es auch denkbar, dass sich die Eindrückeinrichtung gegenüber eines feststehenden Rotors oder Stators bewegt oder sich sowohl Rotor oder Stator als auch die Eindrückeinrichtung bewegen.

In einer bevorzugten Ausführungsform der Erfindung wird der Rotor oder Stator in einer Drehrichtung P2 gedreht und zieht dabei die Wellenwickelmatte in Drehrichtung mit.

In einem anderen bevorzugten erfindungsgemäßen Verfahren werden die Drahtvereinzelungselemente nach dem Einbringen der Wellenwickelmatte in den Rotor oder Stator wieder entfernt. Die Drahtvereinzelungselemente stehen über den Polzähnen in den Raum vor, in dem das Gegenstück des mit dem Rotor oder Stator herzustellenden Motors oder Generators sich bewegen wird. Wird das Drahtvereinzelungselement nach dem Einbringen der Wellenwickelmatte wieder entfernt, kann der Luftspalt zwischen Rotor und Stator so eng wie möglich gewählt werden, was sich auf die Effektivität des Motors vorteilhaft auswirkt.

Nach einem weiteren bevorzugten Verfahren wird die Eindrückeinrichtung beim Eindrücken der Wellenwickelmatte in die Zwischenräume zumindest in radialer Richtung bezogen auf den Rotor oder Stator bewegt. Die Eindrückeinrichtung drückt die Drahtabschnitte der Wickelmatte so tief wie möglich in Richtung Grund der Zwischenräume. Beim ersten Durchlauf des Einlegens, werden die Drahtabschnitte auf den Grund gedrückt, bei den folgenden Durchläufen werden die Drahtabschnitte auf die zuletzt eingelegten Drahtabschnitte aufgelegt, so dass die Eindrückeinrichtung um die Höhe der vorher eingelegten Drahtabschnitte angehoben wird, um den gleichen Andruck zu erreichen. Bei Innenwicklungen wird die Eindrückeinrichtung entsprechend radial nach innen bewegt, bei Außenwicklungen entsprechend radial nach außen.

In einem besonders bevorzugten Verfahren wird die Eindrückeinrichtung in radialer Richtung bezogen auf den Rotor oder Stator hin und her bewegt. Das Hin-und-Her-Bewegen der Eindrückeinrichtung unterstützt das Einlegen der Drahtabschnitte in die Zwischenräume. Zum einen drückt die Eindrückeinrichtung die Drähte stärker ein, wenn sie sich auf den Grund des Zwischenraums zubewegt, zum anderen verringert sie die Gleitreibung zwischen Drahtabschnitt und Kontaktfläche der Eindrückeinrichtung, wenn sie sich von dem Grund des Zwischenraums entfernt.

In einem ganz besonders bevorzugten Verfahren werden zwei Eindrückeinrichtungen eingesetzt, die jeweils an einer Stirnseite des Rotors oder Stators positioniert und relativ zum Rotor oder Stator in radialer Richtung oder in einer Umlaufbewegung, insbesondere im selben Drehsinn wie der Rotor oder Stator, bewegt werden.

Es hat sich als vorteilhaft erwiesen, die Eindrückeinrichtung an einer Stirnseite des Rotors oder Stators zu positionieren. Hier können die Drahtabschnitte an der Kontaktfläche entlang gleiten und in die Zwischenräume eingelegt werden. Sehr vorteilhaft ist es, an jeder Stirnseite eine Eindrückeinrichtung zu positionieren, um keine einseitige Kraft auf die Drahtabschnitte auszuüben, was zu mechanischen Spannungen in der Wellenwicklung führen kann. Eine Hin-und-Her-Bewegung der Eindrückeinrichtungen in radialer Richtung unterstützt das Einlegen, dabei können beide Eindrückeinrichtungen beliebig bewegt werden, wobei es sich allerdings als vorteilhaft gezeigt hat, diese synchron oder gegenläufig zu bewegen.

Es hat sich als besonders vorteilhaft erwiesen, an Stelle der radialen Bewegung mit der wenigstens einen Eindrückeinrichtung eine Umlaufbewegung, bevorzugt eine Kreisbewegung, auszuführen. Als ganz besonders vorteilhaft hat sich diese Umlaufbewegung erwiesen, wenn sie, insbesondere bei Innenwicklungen, im selben Drehsinn wie der Rotor oder Stator bewegt werden; hierbei ruht die Eindrückeinrichtung am Umkehrpunkt, an dem sie die Drahtabschnitte am stärksten in den Zwischenraum drückt, quasi auf den Drahtabschnitten, wenn sie sich in der Position synchron mit dem Rotor oder Stator mitbewegt.

In einem weiteren bevorzugten Verfahren wird eine Wellenwickelmatte verwendet, bei welcher sich der Abstand der parallel zueinander befindlichen, in die Zwischenräume einzubringenden Drahtabschnitte über die Gesamtlänge der Wellenwickelmatte ändert, insbesondere sukzessive vergrößert oder verkleinert. Ein spannungsfreies oder zumindest spannungsarmes Einlegen der Drahtabschnitte ist gegeben, wenn die Wickelköpfe so ausgelegt sind, dass der Abstand benachbarter Drahtabschnitte einer Wellenwicklung genau dem Abstand entspricht, den die Drahtabschnitte im eingelegten Zustand zueinander haben. Bei einer radialen Innenwicklung wird bei jedem Durchlauf der Radius der Position der abgelegten Drahtabschnitte geringer, was auch den Abstand der entsprechenden Drahtabschnitte zueinander verringert. Bei einer radialen Außenwicklung vergrößern sich bei jedem Durchlauf der Radius und damit auch der Abstand zwischen den Drahtabschnitten. Wird dieser Umstand bei der Wicklung der Wellenwickelmatte bereits berücksichtigt, kann eine derartige Wellenwickelmatte spannungsfrei oder zumindest spannungsarm über die gesamte Wicklung eingelegt werden.

Die Aufgabe wird auch gelöst durch eine Vorrichtung zum Einbringen einer Wellenwickelmatte in den Rotor oder Stator einer elektrischen Maschine, insbesondere in ein Statorblechpaket, insbesondere durch ein oben beschriebenes Verfahren. Eine solche Vorrichtung weist folgendes auf: eine Bauteilhalterung, die den Rotor oder Stator hält, eine Zuführeinrichtung, welche eine Wellenwickelmatte transportiert und an den an der Bauteilhalterung gehaltenen Rotor oder Stator heranführt, eine Einbringeinrichtung, welche die Drähte der Wellenwickelmatte vereinzelt und in die Zwischenräume zwischen den Polzähnen des Rotors oder Stators drückt. Weiterhin umfasst die Vorrichtung folgendes: Drahtvereinzelungselemente, welche an einer Stirnseite des Rotors oder Stators über die Polzähne radial vorstehend angeordnet sind, und eine, insbesondere als Formkufe ausgebildete, Eindrückeinrichtung, welche in den Bereich der Wickelköpfe der Wellenwickelmatte dem Rotor oder Stator zustellbar angeordnet ist, wobei die Eindrückeinrichtung und der Rotor oder Stator relativ zueinander beweglich ausgebildet sind. Die Eindrückeinrichtung weist eine Kontaktfläche auf, an welcher Wickeldrähte der Wellenwickelmatte entlang gleiten können.

Die Wellenwickelmatte wird so den Polzähnen des Rotors oder Stators zugeführt, dass die Drahtabschnitte oberhalb der Polzähne angeordnet sind. Die Eindrückeinrichtung drückt dann die Drahtabschnitte in die Zwischenräume zwischen den Polzähnen.

In einer bevorzugten Ausführungsform des erfindungsgemäßen Gegenstands ist der Rotor oder Stator an der Bauteilhalterung in einer Drehrichtung drehend angetrieben.

Mit einer solchen Vorrichtung wird die Wellenwickelmatte den Zwischenräumen des Rotors oder Stators zugeführt und beides synchron an einer Eindrückeinrichtung vorbeigeführt. Dabei drückt die Eindrückeinrichtung die Drahtabschnitte der Wellenwicklungsmatte in die entsprechenden Zwischenräume zwischen den Polzähnen, wobei diese durch Drahtvereinzelungselemente abgedeckt sind, damit die Drahtabschnitte beim Einlegen nicht beschädigt werden.

In einer sehr bevorzugten Ausführungsform der Vorrichtung ist die Eindrückeinrichtung so ausgebildet ist, dass sie sich zum Eindrücken der Wellenwickelmatte in die Zwischenräume in radialer Richtung bezogen auf den Rotor oder Stator bewegen kann. Damit wird erreicht, dass bei jedem Durchlauf die Drahtabschnitte optimal angedrückt werden und der Verringerung der Einlegtiefe in die Zwischenräume bei jedem Durchlauf Rechnung getragen wird.

In einer besonders bevorzugten Ausführungsform ist die Eindrückeinrichtung weiter so ausgebildet, dass sie sich in radialer Richtung bezogen auf den Rotor oder Stator hin und her bewegen kann. Durch die Hin-und-Her-Bewegung wird das feste Einlegen durch die Vorrichtung weiter verstärkt. Dabei ist die Bewegung der Eindrückeinrichtung sowohl in radialer als auch in tangentialer Richtung des Rotors oder Stators möglich.

In einer anderen bevorzugten Ausführungsform weist die Vorrichtung zwei Eindrückeinrichtungen auf, die jeweils an einer Stirnseite des Rotors oder Stators und diesem gegenüber in radialer Richtung und/oder umlaufend, insbesondere im Drehsinn des Rotors oder Stators bewegbar angeordnet sind. Zwei Eindrückeinrichtungen vermeiden eine mögliche Asymmetrie der Einlegkräfte, was zu Verspannungen in der Wellenwickelmatte führen kann. Dabei unterstützt die zusätzliche Bewegung das Einlegen, wobei besonders eine Umlaufbewegung, insbesondere im Drehsinn des Rotors oder Stators, sich als besonders drahtschonend herausgestellt hat.

In einer weiteren bevorzugten Ausführungsform weist die Eindrückeinrichtung eine Kontaktfläche auf, mit der die einzubringenden Drahtabschnitte der Wellenwicklungen beim Einbringen der Wellenwickelmatte in Kontakt kommen. Mit der Kontaktfläche leitet die Eindrückeinrichtung die Drahtabschnitte in die Zwischenräume und drückt sie auf den Boden der Zwischenräume. In einer besonders bevorzugten Ausführungsform weist die Kontaktfläche eine Mehrzahl Krümmungsabschnitte auf. Die einzelnen Krümmungsabschnitte können so den verschiedenen Aufgaben der Abschnitte wie Einfädeln, Ablegen und/oder Andrücken der Drahtabschnitte angepasst werden.

In einer ganz besonders bevorzugten Ausführungsform weist ein erster in Drehrichtung des Stators oder Rotors hinten liegender Krümmungsabschnitt der Kontaktfläche eine Krümmungslinie auf, welche im Wesentlichen komplementär zu der Kreisline ist, die von dem Hüllkreis der obersten Lage der vollständig eingebrachten Wellenwickelmatte beschrieben wird. Der Krümmungsabschnitt drückt die eingebrachten und abgelegten Drahtabschnitte der Wellenwicklung in die Zwischenräume. Dabei ist es besonders wichtig, gerade die oberste Lage gleichmäßig anzudrücken. Es ist also vorteilhaft, die Krümmungslinie des ersten Krümmungsabschnitts auf die oberste Lage abzustimmen.

In einer anderen ganz besonders bevorzugten Ausführungsform weist ein zweiter in Drehrichtung des Stators oder Rotors vorne liegender Krümmungsabschnitt der Kontaktfläche eine Krümmungslinie auf, welche im Wesentlichen parallel zu einer aus Punkten ermittelten Kurve liegt, wobei die Punkte die Schnittpunkte von Kreisen mit Geraden sind, wobei
i) der Radius der Kreise aus einem vorgegebenen Wickelschritt der Wellenwickelmatte und die Kreismitte von der Position des vorhergehenden Drahtabschnitts der entsprechenden Wellenwicklung bestimmt wird,
ii) die Gerade der Mittelsenkrechten der Zwischenräume des Rotors oder Stators, die in radialer Richtung des Rotors oder Stators verlaufen, entspricht. Mit dieser Krümmung wird sichergestellt, dass das Einfädeln der Drahtabschnitte in die Zwischenräume durchgeführt wird, ohne dass eine Spannung auf die Wickelmatte ausgeübt wird, da der vorgegebene Wickelschritt dabei als Abstand zwischen den benachbarten Drahtabschnitten beibehalten wird.

In einer weiteren ganz besonders bevorzugten Ausführungsform ist ein dritter Krümmungsabschnitt der Kontaktfläche zwischen dem ersten und dem zweiten Krümmungsabschnitt angeordnet, dessen Krümmungslinie eine stetige Interpolation der Krümmungslinien des ersten und des zweiten Krümmungsabschnitts ist. Der dritte Krümmungsabschnitt drückt die eingefädelten Drahtabschnitte in Richtung Grund der Zwischenräume. Dabei ist es sinnvoll, keine abrupten Übergänge in der Krümmung der Kontaktfläche zu haben. Dies wird dadurch erreicht, dass kontinuierlich von einer Krümmung in die folgende übergegangen wird.

Nach einer noch weiteren bevorzugten Ausführungsform kann weiter vorgesehen sein, dass die Drahtvereinzelungselemente verbreiterte Bereiche aufweisen, die breiter als die Stirnseite der Polzähne des Rotors oder Stators ausgebildet und dazu ausgelegt sind, stirnseitige Ränder von Nutisolationspapier zwischen sich und den Polzähnen aufzunehmen und insbesondere zu halten. Diese Verbreiterungen dienen als Aufnahmetaschen für eventuell in die Zwischenräume zwischen den Polzähnen eingebrachtes Nutisolationsmittel, beispielsweise Nutisolationspapier oder Nutisolationsfolie. Dazu können die Verbreiterungen, die stirnseitig über die Polzähne gelegt werden, das Nutisolationsmittel an dessen stirnseitigen Bereich am entsprechenden Polzahn axial fixieren. Auf diese Weise kann erreicht werden, dass das entsprechende Nutisolationsmittel nicht beim Einbringen der Wellenwickelmatte verrutscht oder verknickt wird.

Die Erfindung soll im Folgenden anhand von Figuren näher erläutert werden. Dabei wird jetzt der Begriff Stator benutzt, wobei hier sowohl Stator als auch Rotor gemeint sein kann.
- Figur 1 -: zeigt Drahtvereinzelungselemente perspektivisch und in der Seitenansicht,
- Figur 2 -: zeigt eine Wellenwickelmatte, bei der eine Wellenwicklung hervorgehoben ist;
- Figur 3 -: zeigt oben einen rohen Statorausschnitt und unten den Ausschnitt, bei dem der Stator mit Drahtvereinzelungs-elementen bestückt ist,
- Figur 4 -: zeigt den Stator mit Drahtvereinzelungselementen, dem eine Eindrückeinrichtung und eine Führungskufe zugeordnet sind,
- Figur 5 -: zeigt die Vorrichtung der Figur 4, wobei die Wellenwickelmatte den Stator erreicht,
- Figur 6 -: zeigt das Einlegen der Wellenwickelmatte kurz nach dem Beginn,
- Figur 7 -: zeigt eine Eindrückeinrichtung im Detail.

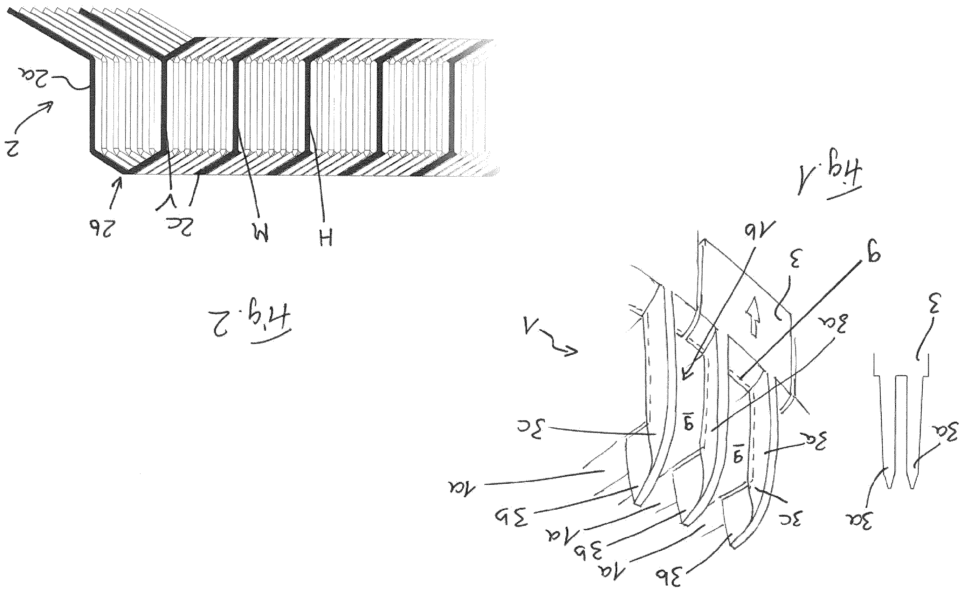

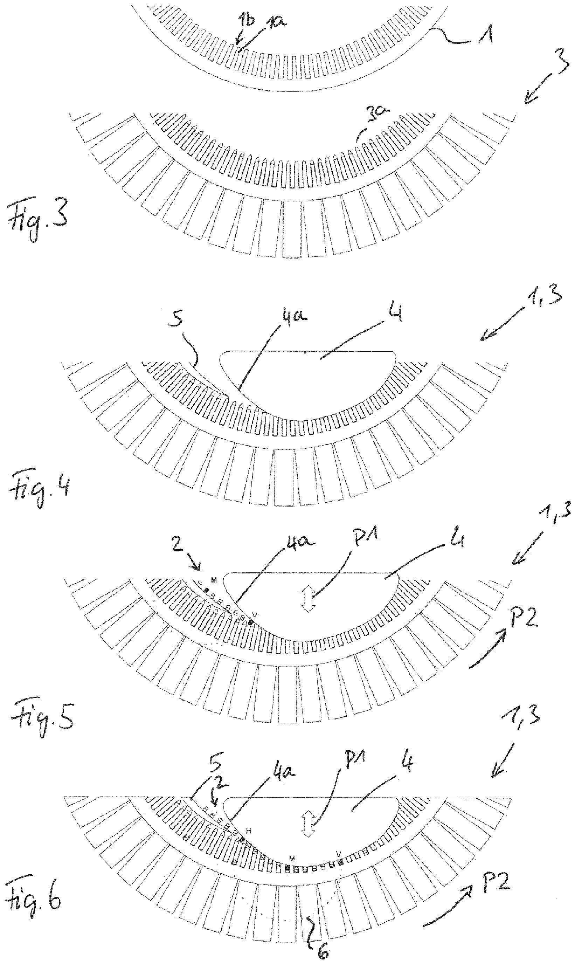

Figur 3 zeigt in der oberen Hälfte einen Stator 1 mit nach innen gerichteten Polzähnen 1a und dazwischenliegenden Zwischenräumen 1b, wobei der Stator 1 bewickelt werden soll. Hierzu werden die Polzähne 1a des Stators 1, wie die untere Hälfte der Figur 3 zeigt, mit Drahtvereinzelungselementen 3a bestückt. In der hier gezeigten Ausführungsform sind, wie die Figur 1 zeigt, jeweils zwei Drahtvereinzelungselemente 3a an einem Bauteil 3 miteinander verbunden. Die bevorzugt als Schieber ausgebildeten Bauteile 3 liegen an der Stirnseite des Stators 1 an und sind dort lösbar fixiert (nicht gezeigt). Die Drahtvereinzelungselemente 3a haben vorspringende Konturen 3b, die auf den Polzähnen 1a aufliegen. Die vorspringende Kontur 3b separiert die einzelnen Drahtabschnitte 2a der Wickelmatte 2 und führt sie in die zugeordneten Zwischenräume 1b. Bevorzugt ist die vorspringende Kontur 3b schmaler ausgebildet als die Polzähne bzw. deren Erstreckung in Umfangsrichtung. So können die Drahtvereinzelungselemente 3a leichter gegriffen und in der Zeichnung radial nach außen wieder entfernt werden, wenn die Wellenwickelmatte 2 eingebracht ist. Weiterhin verfügt das Drahtvereinzelungselement 3a über Drahtführungsabschnitte 3c, die die Drahtabschnitte 2a einer Wellenwickelmatte 2 (Fig. 2) in die Zwischenräume 1b führen, ohne dass diese etwas über die scharfen Kanten der Polzähne 1a gleiten und dabei eventuell beschädigt werden. Eine weitere Funktion der Drahtvereinzelungselemente 3a zusammen mit dem Bauteil 3 ist, ein eingelegtes, beispielsweise als Nutisolationspapier oder Nutisolationsfolie ausgebildetes, Nutisolationsmittel 9 (Kanten des Nutisolationsmittels 9 sind wegen der Verdeckung gestrichelt gezeigt), das den Boden des Zwischenraumes 1b und die von den Polzähnen 1a gebildeten Seitenwände des Zwischenraums 1b abdeckt, an der Stirnseite zu fixieren, um ein Verschieben des Nutisolationsmittels 9 beim Einlegen der Wellenwickelmatte 2 zu verhindern. Nach Beendigung des Wickelvorgangs werden die Schieber 3 vom Stator 1 gelöst und die Drahtvereinzelungselemente 3a von Stator 1 entfernt.

Figur 2 zeigt eine typische Wellenwickelmatte 2, wobei beispielhaft eine einzelne Wellenwicklung 2c dunkel hervorgehoben ist. Die Wellenwicklung 2c besteht aus einer Aneinanderreihung von Drahtabschnitten 2a, die in die Zwischenräume 1b zwischen den Polzähnen 1a gelegt werden, und Wickelköpfen 2b, die die Drahtabschnitte 2a miteinander verbinden. Besonders gekennzeichnet sind drei aufeinander folgende Drahtabschnitte 2a einer Wellenwicklung 2c: M ist ein mittlerer Drahtabschnitt 2a, V der diesem vorhergehende Drahtabschnitt 2a und H der auf den mittleren Drahtabschnitt M folgende Drahtabschnitt 2a derselben Wellenwicklung.

Die hier gezeigte Wellenwickelmatte 2 setzt sich aus sechs Wellenwicklungen 2c zusammen. Dies ist nur eine mögliche Ausführung. Die Erfindung betrifft natürlich auch andere Wellenwickelmatten 2, die sich aus mehr oder weniger als sechs Wellenwicklungen zusammensetzen.

In der Figur 4 ist dem Stator 1, der mit Drahtvereinzelungselementen 3a versehen ist, eine Eindrückeinrichtung 4 zugeordnet. Diese Eindrückeinrichtung 4 ist an der Stirnseite des Stators 1 angeordnet. Links von der Eindrückeinrichtung 4 ist das Ende einer Führung 5 (im Folgenden beispielhaft "Führungskufe") gezeigt. Die Führungskufe 5 soll die zugeführte Wellenwickelmatte 2, wie in Figur 5 und 6 gezeigt, den Polzähnen 1a des Stators 1 an der richtigen Stelle zuführen, ohne dass die Wellenwickelmatte dabei ungewollt zwischen die Polzähne 1a gerät. Figur 5 zeigt eine Situation, in der der Anfang der Wellenwickelmatte 2 mit dem Drahtabschnitt V von der Führungskufe 5 bereits an die Kontaktfläche 4a der Eindrückeinrichtung 4 geführt ist. Der Stator 1 wird in der Zeichnung entgegen dem Uhrzeigersinn gedreht und zieht dabei Wellenwickelmatte 2 mit. Durch die daraus resultierende gemeinsame Drehbewegung von Stator 1 und Wellenwickelmatte 2 in Richtung P2 gleiten die einzelnen Drahtabschnitte 2a in die betreffenden Zwischenräume 1b und werden von der Eindrückeinrichtung 4 zum Grund der Zwischenräume 1b gedrückt. Dabei kann das Einlegen der Drahtabschnitte 2a mittels der Eindrückeinrichtung 4 dadurch unterstützt werden, dass sich die Eindrückeinrichtung 4 dabei in radialer Richtung P1 des Stators 1 hin und her bewegt oder gar in zyklischer Bewegung dem Drehsinn des Startors 1 folgend bewegt. Auf diese Weise wird die Wellenwickelmatte 2 in die entsprechenden Zwischenräume 1b "einmassiert".

Figur 6 zeigt eine Situation, bei der das Einlegen der Wickelmatte 2 weiter fortgeschritten ist. Hier wird gerade der Drahtabschnitt H von der Kontaktfläche 4a der Eindrückeinrichtung 4 zwischen die vorspringenden Konturen 3b der Drahtvereinzelungselemente 3a geführt. Die entsprechenden Konturen 3b sind in Umfangsrichtung des Stators 1 abgerundet, sodass ein entsprechender Draht an den Flanken der Drahtvereinzelungselemente 3a entlang in den entsprechenden Zwischenraum 1b gleiten kann. Durch das Mitziehen der Wellenwickelmatte 2 wird diese gestreckt, sodass der Drahtabschnitt H beim Kontakt mit dem entsprechenden Drahtvereinzelungselemente 3a unter Vorspannung über einen Totpunkt gezogen und anschließend in entspannter Lage im Zwischenraum 1b abgelegt wird.

Andeutungsweise (gestrichelt) ist der Kreis 6 um dem mittleren Drahtabschnitt M gezeigt. Der Radius des Kreises 6 entspricht dem Wickelschritt T einer Wellenwicklung 2c, hier beispielsweise dem Abstand zwischen M und V. Somit liegen die beiden Drahtabschnitte M und V spannungsfrei in den jeweiligen Zwischenräumen 1b. Die Krümmung der Kontaktfläche 4a der Eindrückeinrichtung 4 ist so ausgelegt, dass beim Eintauchen des Drahtabschnitts H zwischen die vorspringenden Konturen 3b dieser genau auf dem Kreis 6 liegt, der Drahtabschnitt H also ebenfalls spannungsfrei gegenüber dem Drahtabschnitt M ist. Durch das Drehen P2 des Stators 1 mit der Wellenwickelmatte 2 an der Eindrückeinrichtung 4 vorbei, werden die Drahtabschnitte 2a in die Zwischenräume 1b gedrückt und kommen dort entspannt zu liegen. Weiterhin sorgt die Krümmung der Kontaktfläche 4a für eine Minimierung der Torsion der Wellenwicklung 2c und für eine optimale Passfähigkeit mit dem Profil des Zwischenraumes 1b.

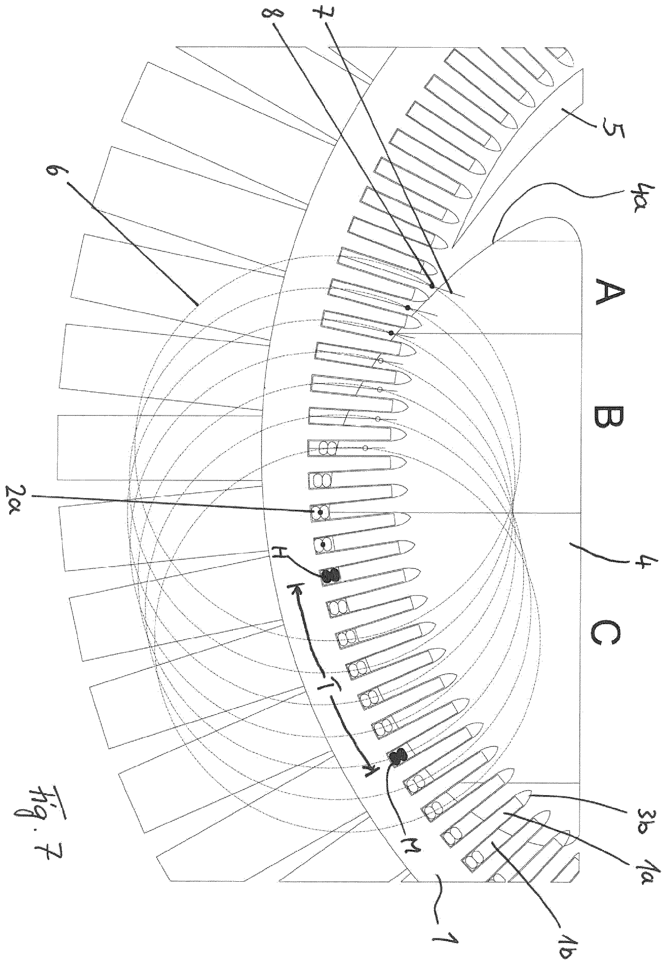

Figur 7 zeigt eine Eindrückeinrichtung 4, die in dieser Seitenansicht aus Gründen der Übersichtlichkeit hinter dem Stator 1 angeordnet ist. Die Kontaktfläche 4a der Eindrückeinrichtung 4, also die Fläche derselben, die mit den in die Zwischenräume 1b einzudrückenden Drähte in Kontakt kommt, ist in drei Krümmungsabschnitte A, B, C eingeteilt. Der Krümmungsabschnitt A ist der Einfädelabschnitt. Die von der Führungskufe 5 kommenden Drahtabschnitte 2a der Wellenwickelmatte 2 kommen in Kontakt mit der Eindrückeinrichtung 4 und gleiten an der Kontaktfläche 4a entlang zu den vorspringenden Konturen 3b, die auf den Polzähnen 1a angeordnet sind. Die hier im Schnitt gezeigte Kontur der Kontaktfläche 4a wird in diesem Krümmungsabschnitt A bestimmt durch die Maßgabe, dass ein einzulegender Drahtabschnitt 2a entspannt zu dem in der Wellenwicklung 2c vor ihm liegenden Drahtabschnitt 2a in dem Zwischenraum 1c liegen soll.

Da die Wellenwickelmatte 2 im Endzustand ohne Spannung in dem Stator 1 zu liegen kommen soll, entspricht der Abstand zweier benachbarter Drahtanschnitte 2a, also der Wickelschritt T, in diesem Fall dem Sechsfachen des Abstandes zweier Polzähne 1a oder anders ausgedrückt, dem Abstand der Mitten zweier Zwischenräume 1b, in der Höhe der vorgegebenen Endlage der jeweiligen Drahtabschnitte 2a.

Im gezeigten Beispiel einer Innenwicklung bedeutet dies, dass der Wickelschritt T sich nach jedem Durchlauf der Stators 1 verringert, da die Polzähne 1a zum Mittelpunkt des Stators 1 gerichtet sind und sich bei jedem Durchlauf der Radius der Endlage der einzulegenden Drahtabschnitte 2a und damit eben auch der Wickelschritt T verändert; im gezeigten Beispiel verringert er sich von Wickellage zu Wickellage. Die Wellenwickelmatte 2 ist deswegen im Vorfeld so hergestellt worden, dass die Abstände zwischen den Wicklungen entsprechend variieren. Die Kontaktfläche 4a der Eindrückeinrichtung 4 ist so gewählt, dass sich der einzulegende Drahtabschnitt 2a beim Einlegen an dem Schnittpunkt 8 befindet. An dem Schnittpunkt 8 schneiden sich die Mittelsenkrechten 7 der Zwischenräume 1b, in die der Drahtabschnitt 2a eingelegt werden soll, mit dem Kreis 6, dessen Mittelpunkt von dem innerhalb einer Wellenwicklung 2c vorhergehenden Drahtabschnitt 2a gebildet wird und dessen Radius dem Wickelschritt T entspricht. Ein einzulegender Drahtabschnitt 2a, der sich auf dem Kreis 6 befindet, ist gegenüber dem in der Wellenwicklung 2c vorausgehenden Drahtabschnitt 2a entspannt. Befindet sich der entspannte Drahtabschnitt 2a beim Eintreten zwischen die vorspringenden Konturen 3b auf dem Punkt 8, so wird er entspannt eingelegt.

Um beim Einlegen die Bedingungen gleich zu behalten, muss die Eindrückeinrichtung 4 nach einem Durchlauf des Stators 1 um die Dicke der eingelegten Drahtabschnitte 2a angehoben werden. Bei der Innenwicklung verkleinert sich der Wickelschritt T und damit der Radius des Kreises 6' (nicht gezeigt). Dieses wiederum verschiebt den Punkt 8 in diesem Fall in der Darstellung nach rechts, wodurch ein anderer Punkt auf der Kontaktfläche 4a zum Zeitpunkt des Einbringens den entsprechenden Drahtabschnitt 2a berührt. So kann Lage für Lage der entsprechende Kontaktpunkt ermittelt und so die Kontur der Kontaktfläche im Krümmungsabschnitts A festgelegt werden.

Der rechte Teil der Kontaktfläche 4a der Eindrückeinrichtung 4, der Krümmungsabschnitt C, dient zum Drücken der eingelegten Wickelmatte 2 auf den Boden der Zwischenräume 1b. Entscheidend dabei ist der linke Endabschnitt des Krümmungsabschnitts C. Damit der Punkt immer drückt, darf der Krümmungsradius des Krümmungsabschnitts C nicht größer sein als der der einzulegenden Lage der Drahtabschnitte 2a. In diesem Abschnitt C ist von Vorteil, wenn der Krümmungsradius der Krümmungslinie der Kontaktfläche 4a in diesem Bereich dem Radius entspricht, der durch den nach dem Einbringen der Wellenwickelmatte 2 in den Stator 1 gegebenen Innenradius der obersten Lage der Wellenwicklungen definiert ist.

Der Bereich des Krümmungsabschnitts B dient zum Ablegen der Drahtabschnitte 2a auf dem Boden der Zwischenräume 1b. Hier muss von der Kontaktflächen 4a des Krümmungsabschnitts A ein möglichst fließender Übergang ohne Stufen oder Kanten zu dem Krümmungsabschnitt C geschaffen werden, wobei die Kontur so ausfallen muss, dass der einzulegende Drahtabschnitt 2a gut auf den Boden der Zwischenräume 1b geführt wird. Dabei hat es sich als vorteilhaft erwiesen, die Krümmungslinie aus einer stetigen Interpolation der Krümmungslinien der Krümmungsabschnitte A und C zu ermitteln.

Die hier diskutierten Beispiele betreffen Innenwicklungen von Statoren 1. Hier hat sich die Erfindung als besonders vorteilhaft erwiesen. Allerdings ist die Erfindung auch für Außenwicklungen geeignet. Bei Außenwicklungen muss die Kontaktfläche 4a der Eindrückeinrichtung 4 anders gestaltet werden. Bei der Außenwicklung vergrößert sich von Lage zu Lage der Wickelschritt T, wodurch sich der Schnittpunkt 8 auf der Kontaktfläche 4a des Krümmungsabschnitts A nach links verschiebt. Der Krümmungsradius der gegenüber der Innenwicklung "negativ" gekrümmten Krümmungsabschnitts C darf dann minimal so groß sein, wie die Krümmung der äußeren letzten Lage der eingelegten Wellenwickelmatte 2. Auch wenn die Kontur der Kontaktfläche 4a im Krümmungsabschnitt B auf die gleiche Art ermittelt wird wie bei der Innenwicklung, wird sie anders aussehen, da sie einen Übergang zwischen den benachbarten, anders aussehenden Krümmungsabschnitten A und C bildet.

## Patentansprüche

1. Verfahren zum Einbringen einer Wellenwickelmatte (2) in den Rotor oder Stator einer elektrischen Maschine, insbesondere in ein Statorblechpaket (1), mit folgenden Schritten:
i) Bereitstellen einer aus einer oder einer Mehrzahl Wellenwicklungen (2c) gebildeten Wellenwickelmatte (2);
ii) Bereitstellen eines mit der Wellenwickelmatte (2) zu bestückenden Rotors oder Stators (1), welcher eine Mehrzahl in Umfangsrichtung entlang der Innen- oder Außenseite des Rotors oder Stators (1) angeordnete und über Zwischenräume (1b) beabstandete Polzähne (1a) aufweist,
iii) Einbringen der Wellenwicklung (2) durch sukzessives Anordnen von zwischen den Wickelköpfen (2b) der Wellenwickelmatte (2) befindlichen Drahtabschnitten (2a) in die Zwischenräume (1b),
**dadurch gekennzeichnet,**
**dass** vor dem Schritt iii) an einer Stirnseite des Rotors oder Stators (1) über die Polzähne (1a) radial vorstehende Drahtvereinzelungselemente (3a) angeordnet werden, wobei die Drahtvereinzelungselemente (3a) vorspringende Konturen (3b) aufweisen, die auf den Polzähnen aufliegen und welche die einzelnen Drahtabschnitte (2a) der Wickelmatte (2) separieren und in die Zwischenräume (1b) führen, wobei im Bereich der Wickelköpfe (2b) der Wellenwickelmatte (2) eine, insbesondere als Formkufe ausgebildete, Eindrückeinrichtung (4) zugestellt wird, wobei Rotor oder Stator (1) und Eindrückeinrichtung (4) relativ zueinander bewegt werden, und wobei die Eindrückeinrichtung (4) eine Kontaktfläche (4a) aufweist, an welcher Bereiche der Wickeldrähte der Wellenwickelmatte (2) entlang gleiten, von den Drahtvereinzelungselementen (3a) vereinzelt und infolge der Relativbewegung von Rotor oder Stator (1) und der Eindrückeinrichtung (5) in die Zwischenräume (1b) gedrückt werden.

2. Verfahren nach Anspruch 1,
**dadurch gekennzeichnet,**
**dass** der Rotor oder Stator (1) in einer Drehrichtung (P2) gedreht wird und dabei die Wellenwickelmatte (2) in Drehrichtung (P2) mitzieht.

3. Verfahren nach Anspruch 1 oder 2,
**dadurch gekennzeichnet,**
**dass** die Drahtvereinzelungselemente (3a) nach dem Einbringen der Wellenwickelmatte (2) in den Rotor oder Stator (1) wieder entfernt werden.

4. Verfahren nach einem der vorigen Ansprüche,
**dadurch gekennzeichnet,**
**dass** die Eindrückeinrichtung (4) beim Eindrücken der Wellenwickelmatte (2) in die Zwischenräume (1b) in radialer Richtung bezogen auf den Rotor oder Stator (1) bewegt wird.

5. Verfahren nach Anspruch 4,
**dadurch gekennzeichnet,**
**dass** die Eindrückeinrichtung (4) in radialer Richtung bezogen auf den Rotor oder Stator (1) hin und her bewegt (P1) wird.

6. Verfahren nach einem der vorigen Ansprüche,
**dadurch gekennzeichnet,**
**dass** zwei Eindrückeinrichtungen (4) eingesetzt werden, die jeweils an einer Stirnseite des Rotors oder Stators (1) positioniert und relativ zum Rotor oder Stator (1) in radialer Richtung oder in einer Umlaufbewegung, insbesondere im selben Drehsinn wie der Rotor oder Stator (1), bewegt werden.

7. Verfahren nach einem der vorigen Ansprüche,
**dadurch gekennzeichnet,**
**dass** eine Wellenwickelmatte (2) verwendet wird, bei welcher sich der Abstand der parallel zueinander befindlichen, in die Zwischenräume (1b) einzubringenden Drahtabschnitte (2a) über die Gesamtlänge der Wellenwickelmatte (2) ändert, insbesondere sukzessive vergrößert oder verkleinert.

8. Vorrichtung zum Einbringen einer Wellenwickelmatte in den Rotor oder Stator (1) einer elektrischen Maschine, insbesondere in ein Statorblechpaket, durch ein Verfahren nach einem der vorigen Ansprüche, wobei die Vorrichtung folgendes aufweist:
eine Bauteilhalterung, die den Rotor oder Stator (1) hält,
eine Zuführeinrichtung, welche eine Wellenwickelmatte (2) transportiert und an den an der Bauteilhalterung gehaltenen Rotor oder Stator (1) heranführt, eine Einbringeinrichtung, welche die Drähte (2a) der Wellenwickelmatte (2) vereinzelt und in die Zwischenräume (1b) zwischen den Polzähnen (1a) des Rotors oder Stators (1) drückt,
**dadurch gekennzeichnet,**
**dass** die Vorrichtung weiter folgendes umfasst: Drahtvereinzelungselemente (3a), welche an einer Stirnseite des Rotors oder Stators (1) über die Polzähne (1a) radial vorstehend angeordnet sind, wobei die Drahtvereinzelungselemente (3a) vorspringende Konturen (3b) aufweisen, die auf den Polzähnen aufliegen und welche die einzelnen Drahtabschnitte (2a) der Wickelmatte (2) separieren und in die Zwischenräume (1b) führen können, und eine, insbesondere als Formkufe ausgebildete, Eindrückeinrichtung (4), welche in den Bereich der Wickelköpfe (2b) der Wellenwickelmatte (2) dem Rotor oder Stator (1) zustellbar angeordnet ist,
wobei die Eindrückeinrichtung (4) und der Rotor oder Stator (1) relativ zueinander beweglich ausgebildet sind, wobei die Eindrückeinrichtung (4) eine Kontaktfläche (4a) aufweist, an welcher Wickeldrähte (2a) der Wellenwickelmatte (2) entlang gleiten können.

9. Vorrichtung nach Anspruch 8,
**dadurch gekennzeichnet,**
**dass** der Rotor oder Stator (1) an der Bauteilhalterung (4) in einer Drehrichtung (P2) drehend angetrieben ist.

10. Vorrichtung nach Anspruch 9,
**dadurch gekennzeichnet,**
**dass** die Eindrückeinrichtung (4) so ausgebildet ist, dass sie sich zum Eindrücken der Wellenwickelmatte (2) in die Zwischenräume (1b) in radialer Richtung bezogen auf den Rotor oder Stator (1) bewegen kann.

11. Vorrichtung nach Anspruch 10,
**dadurch gekennzeichnet,**
**dass** die Eindrückeinrichtung (4) weiter so ausgebildet ist, dass sie sich in radialer Richtung bezogen auf den Rotor oder Stator (1) hin und her bewegen kann.

12. Vorrichtung nach einem der Ansprüche 8 bis 11,
**dadurch gekennzeichnet,**
**dass** sie zwei Eindrückeinrichtungen (4) aufweist, die jeweils an einer Stirnseite des Rotors oder Stators (1) und diesem gegenüber in radialer Richtung und/oder umlaufend, insbesondere im Drehsinn des Rotors oder Stators (1) bewegbar angeordnet sind.

13. Vorrichtung nach einem der Ansprüche 8 bis 12, **dadurch gekennzeichnet,**
**dass** die Eindrückeinrichtung (4) eine Kontaktfläche (4a) aufweist, mit der die einzubringen Wellenwicklungen (2c) beim Einbringen der Wellenwicklung (2c) in Kontakt kommen.

14. Vorrichtung nach Anspruch 13,
**dadurch gekennzeichnet**,
das die Kontaktfläche (4a) eine Mehrzahl Krümmungsabschnitte (A, B, C) aufweist.

15. Vorrichtung nach Anspruch 14,
**dadurch gekennzeichnet,**
**dass** ein erster in Drehrichtung des Stators oder Rotors (1) hinten liegender Krümmungsabschnitt (C) der Kontaktfläche (4a) eine Krümmungslinie aufweist, welche im Wesentlichen komplementär zu der Kreisline ist, die von dem Hüllkreis der obersten Lage der vollständig eingebrachten Wellenwicklung beschrieben wird.

16. Vorrichtung nach Anspruch 14 oder 15,
**dadurch gekennzeichnet,**
**dass** ein zweiter in Drehrichtung des Stators oder Rotors (1) vorne liegender Krümmungsabschnitt (A) der Kontaktfläche (4a) eine Krümmungslinie aufweist, welche im Wesentlichen parallel zu einer aus Punkten ermittelten Kurve liegt, wobei die Punkte die Schnittpunkte (8) von Kreisen mit Geraden sind, wobei
i) der Radius der Kreise (6) aus einem vorgegebenen Wickelschritt (T) der Wellenwickelmatte (2) und die Kreismitte von der Position des vorhergehenden Drahtabschnitts (2a) der entsprechenden Wellenwicklung (2c) bestimmt wird,
ii) die Gerade der Mittelsenkrechten (7) der Zwischenräume (1b) des Rotors oder Stators (1), die in radialer Richtung des Rotors oder Stators (1) verlaufen, entspricht.

17. Vorrichtung nach Anspruch 15 oder 16,
**dadurch gekennzeichnet,**
**dass** ein dritter Krümmungsabschnitt (B) der Kontaktfläche (4a) zwischen dem ersten und dem zweiten Krümmungsabschnitt (A, C) angeordnet ist, dessen Krümmungslinie eine stetige Interpolation der Krümmungslinien des ersten und des zweiten Krümmungsabschnitts (A, C) ist.

18. Vorrichtung nach einem der Ansprüche 8 bis 16,
**dadurch gekennzeichnet,**
**dass** die Drahtvereinzelungselemente (3a) verbreiterte Bereiche aufweisen, die breiter als die Stirnseite der Polzähne (1a) des Rotors oder Stators (1) ausgebildet und dazu ausgelegt sind, stirnseitige Ränder von einem, insbesondere als Nutisolationsfolie oder Nutisolationspapier ausgebildeten, Nutisolationsmittel (9) zwischen sich und den Polzähnen (1a) aufzunehmen und insbesondere zu halten.

## Claims

1. Method for introducing a wave winding mat (2) into the rotor or stator of an electrical machine, in particular into a laminated stator core (1), with the following steps:
i) providing a wave winding mat (2) formed from one or more wave windings (2c);
ii) providing a rotor or stator (1) to be equipped with the wave winding mat (2), which has a plurality of pole teeth (1a) arranged in the circumferential direction along the inside or outside of the rotor or stator (1) and spaced apart by interspaces (1b),
iii) introducing the wave winding (2) into the interspaces (1b) through successive arrangement of wire sections (2a) located between the winding heads (2b) of the wave winding mat (2),
**characterized in that**,
before step iii), wire separation elements (3a) projecting radially beyond the pole teeth (1a) are arranged on an end face of the rotor or stator (1), wherein the wire separation elements (3a) have projecting contours (3b) which rest on the pole teeth and which separate the individual wire sections (2a) of the winding mat (2) and guide them into the interspaces (1b), wherein an insertion apparatus (4), in particular formed as a form shoe, is supplied in the area of the winding heads (2b) of the wave winding mat (2), wherein rotor or stator (1) and insertion apparatus (4) are moved relative to one another, and wherein the insertion apparatus (4) has a contact surface (4a), along which areas of the winding wires of the wave winding mat (2) slide, are separated by the wire separation elements (3a) and pressed into the interspaces (1b) as a result of the relative movement of rotor or stator (1) and the insertion apparatus (5).

2. Method according to claim 1,
**characterized in that**
the rotor or stator (1) is rotated in a direction of rotation (P2) and pulls the wave winding mat (2) with it in the direction of rotation (P2).

3. Method according to claim 1 or 2,
**characterized in that**
the wire separation elements (3a) are removed again after the wave winding mat (2) has been introduced into the rotor or stator (1).

4. Method according to one of the preceding claims,
**characterized in that**
the insertion apparatus (4) is moved in the radial direction relative to the rotor or stator (1) when the wave winding mat (2) is pressed into the interspaces (1b).

5. Method according to claim 4,
**characterized in that**
the insertion apparatus (4) is moved to and fro (P1) in the radial direction relative to the rotor or stator (1).

6. Method according to one of the preceding claims,
**characterized in that**
two insertion apparatuses (4) are used, each of which is positioned on an end face of the rotor or stator (1) and is moved in the radial direction relative to the rotor or stator (1) or in a circulating movement, in particular in the same rotational direction as the rotor or stator (1).

7. Method according to one of the preceding claims,
**characterized in that**
a wave winding mat (2) is used in which the spacing of the wire sections (2a) located parallel to one another to be introduced into the interspaces (1b) changes over the total length of the wave winding mat (2), in particular increases or decreases successively.

8. Device for introducing a wave winding mat into the rotor or stator (1) of an electrical machine, in particular into a laminated stator core, using a method according to one of the preceding claims, wherein the device has the following:
a component holder which holds the rotor or stator (1),
a feeding apparatus which transports a wave winding mat (2) and guides it to the rotor or stator (1) held on the component holder, an introduction apparatus which separates the wires (2a) of the wave winding mat (2) and presses them into the interspaces (1b) between the pole teeth (1a) of the rotor or stator (1),
**characterized in that**
the device further comprises the following:
wire separation elements (3a) which are arranged radially projecting beyond the pole teeth (1a) on an end face of the rotor or stator (1), wherein the wire separation elements (3a) have projecting contours (3b) which rest on the pole teeth and which can separate the individual wire sections (2a) of the winding mat (2) and guide them into the interspaces (1b), and an insertion apparatus (4), in particular formed as a form shoe, which is arranged in the area of the winding heads (2b) of the wave winding mat (2) able to be supplied to the rotor or stator (1),
wherein the insertion apparatus (4) and the rotor or stator (1) are formed movable relative to one another,
wherein the insertion apparatus (4) has a contact surface (4a) along which winding wires (2a) of the wave winding mat (2) can slide.

9. Device according to claim 8,
**characterized in that**
the rotor or stator (1) on the component holder (4) is driven rotating in a direction of rotation (P2).

10. Device according to claim 9,
**characterized in that**
the insertion apparatus (4) is formed such that it can move in the radial direction relative to the rotor or stator (1) to press the wave winding mat (2) into the interspaces (1b).

11. Device according to claim 10,
**characterized in that**
the insertion apparatus (4) is further formed such that it can move to and fro in the radial direction relative to the rotor or stator (1).

12. Device according to one of claims 8 to 11,
**characterized in that**
it has two insertion apparatuses (4), each of which is arranged on an end face of the rotor or stator (1) and movable in the radial direction and/or circulating relative thereto, in particular in the rotational direction of the rotor or stator (1).

13. Device according to one of claims 8 to 12,
**characterized in that**
the insertion apparatus (4) has a contact surface (4a) with which the wave windings (2c) to be introduced come into contact when the wave winding (2c) is introduced.

14. Device according to claim 13,
**characterized in that**
the contact surface (4a) has a plurality of curved sections (A, B, C).

15. Device according to claim 14,
**characterized in that**
a first curved section (C), lying at the back in the direction of rotation of the stator or rotor (1), of the contact surface (4a) has a curved line which is substantially complementary to the circular line which is described by the minimum circumscribed circle of the topmost layer of the fully introduced wave winding.

16. Device according to claim 14 or 15,
**characterized in that**
a second curved section (A), lying at the front in the direction of rotation of the stator or rotor (1), of the contact surface (4a) has a curved line which is substantially parallel to a curve calculated from points, wherein the points are the intersections (8) of circles with straight lines, wherein
i) the radius of the circles (6) is determined from a predefined winding pitch (T) of the wave winding mat (2), and the centre of the circle is determined by the position of the preceding wire section (2a) of the corresponding wave winding (2c),
ii) the straight line corresponds to the perpendicular bisectors (7) of the interspaces (1b) of the rotor or stator (1) which run in the radial direction of the rotor or stator (1).

17. Device according to claim 15 or 16,
**characterized in that**
a third curved section (B) of the contact surface (4a) is arranged between the first and the second curved section (A, C), the curved line of which is a constant interpolation of the curved lines of the first and the second curved section (A, C).

18. Device according to one of claims 8 to 16,
**characterized in that**
the wire separation elements (3a) have widened areas, which are formed wider than the end face of the pole teeth (1a) of the rotor or stator (1) and are designed to accommodate and in particular to hold end-face edges of a slot insulation means (9), in particular formed as slot insulation film or slot insulation paper, between them and the pole teeth (1a).

## Revendications

1. Procédé d'introduction d'une natte d'enroulement ondulé (2) dans le rotor ou le stator d'une machine électrique, en particulier dans un paquet de tôles statoriques (1), avec les étapes suivantes:
i) Mise à disposition d'une natte d'enroulement ondulé (2) formée par un ou par une pluralité d'enroulements ondulés (2c),
ii) mise à disposition d'un rotor ou d'un stator (1), destiné à être équipé de la natte d'enroulement ondulé (2), lequel présente une pluralité de dents polaires (1a) disposées dans la direction circonférentielle, le long de la surface intérieure ou extérieure du rotor ou du stator (1) et distancées par des interstices (1b),
iii) introduction de l'enroulement (2) dans les interstices (1b), par dispositions successives de portions de fils (2a), situées entre les têtes d'enroulement (2b) de la natte d'enroulement ondulé (2), **caractérisé en ce que**,
avant l'étape iii), des éléments de séparation individuelle de fils (3a), radialement en saillie au-dessus des dents polaires (1a), sont disposés sur un côté frontal du rotor ou du stator (1),
sachant que les éléments de séparation individuelle de fils (3a) présentent des contours saillants (3b), qui sont posés sur les dents polaires et qui séparent les portions de fils (2a) de la natte d'enroulement ondulé (2) et les conduisent dans les interstices (1b),
sachant que, dans le secteur des têtes d'enroulement (2b) de la natte d'enroulement ondulé (2), un dispositif de pression (4), réalisé en particulier en forme de marche façonnée, est disponible, sachant que rotor ou stator (1) et dispositif de pression (4) se déplacent l'un par rapport à l'autre, et sachant que le dispositif de pression (4) présente une surface de contact (4a) le long de laquelle des portions de fils d'enroulement (2a) de la natte d'enroulement ondulé (2) glissent, sont séparés individuellement par éléments de séparation individuelle de fils (3a) et sont pressés dans les interstices (1b) à la suite du mouvement du rotor ou du stator (1) et du dispositif de pression (5) l'un par rapport à l'autre.

2. Procédé selon la revendication 1,
**caractérisé en ce que**
le rotor ou le stator (1) est tourné dans une direction de rotation (P2) et que, ce faisant, il entraîne la natte d'enroulement ondulé (2) dans la direction de rotation (P2).

3. Procédé selon la revendication 1 ou 2,
**caractérisé en ce que**,
après l'introduction de la natte d'enroulement ondulé (2) dans le rotor ou dans le stator (1), les éléments de séparation individuelle de fil (3a) sont de nouveau enlevés.

4. Procédé selon l'une des revendications précédentes,
**caractérisé en ce que**
le dispositif de pression (4), lors de la pression de la natte d'enroulement ondulé (2) dans les interstices (1b), est mû dans la direction radiale par rapport au rotor ou au stator (1).

5. Procédé selon la revendication 4,
**caractérisé en ce que**
le dispositif de pression (4) est mû en va-et-vient dans la direction radiale (P1) par rapport au rotor ou au stator (1).

6. Procédé selon l'une des revendications précédentes,
**caractérisé en ce que**
deux dispositifs de pression (4), dont chacun desquels est positionné sur un côté frontal du rotor ou du stator (1) et est mû, par rapport au rotor ou au stator (1), dans la direction radiale ou en mouvement circonférentiel, en particulier dans le même sens de rotation que le rotor ou le stator (1).

7. Procédé selon l'une des revendications précédentes,
**caractérisé en ce que**
l'on utilise une natte d'enroulement ondulé (2) dans laquelle l'intervalle entre les portions de fil (2a), qui, disposées parallèlement les unes par rapport aux autres, doivent être introduites dans les interstices (1b), change sur toute la longueur de la natte d'enroulement ondulé (2), en particulier augmente ou diminue successivement.

8. Dispositif d'introduction d'une natte d'enroulement ondulé (2) dans le rotor ou le stator (1) d'une machine électrique, en particulier un paquet de tôles statoriques, selon un procédé conforme à l'une des revendications précédentes, sachant que le dispositif présente ce qui suit :
un support de composants qui maintient le rotor ou le stator (1), un dispositif d'alimentation qui transporte une natte d'enroulement ondulé (2) et la conduit au rotor ou au stator (1), qui est maintenu sur le support de composants, un dispositif d'introduction, lequel sépare individuellement les fils (2a) de la natte d'enroulement ondulé (2) et les presse dans les interstices (1b) entre les dents polaires (1a) du rotor ou du stator (1),
**caractérisé en ce que**
le dispositif comprend de plus ce qui suit:
des éléments de séparation individuelle de fils (3a), lesquels sont disposés sur un côté du rotor ou du stator (1), radialement en saillie au-dessus des dents polaires, sachant que les éléments de séparation individuelle de fils (3a) présentent des contours saillants (3b), qui sont posés sur les dents polaires (1a) et qui séparent les portions de fils (2a) de la natte d'enroulement ondulé (2) et peuvent les conduire dans les interstices (1b), et un dispositif de pression (4), réalisé en particulier en forme de marche façonnée, qui est disposés dans le secteur des têtes d'enroulement (2b) de la natte d'enroulement ondulé (2) en pouvant être associé au rotor ou au stator (1), sachant que le dispositif de pression (4) et le rotor ou le stator (1) sont de conception mobile l'un par rapport à l'autre, sachant que le dispositif de pression (4) présente une surface de contact (4a) le long de laquelle des fils d'enroulement (2a) de la natte d'enroulement ondulés (2) peuvent glisser.

9. Dispositif selon la revendication 8,
**caractérisé en ce que**
le rotor ou le stator (1), sur le support de composants (4), est entraîné en rotation dans une direction de rotation (P2).

10. Dispositif selon la revendication 9,
**caractérisé en ce que**
le dispositif de pression (4) est conçu de manière à ce qu'il puisse se mouvoir dans la direction radiale, par rapport au rotor ou au stator (1), pour presser la natte d'enroulement ondulé (2) dans l'interstice (1b).

11. Dispositif selon la revendication 10,
**caractérisé en ce que**
le dispositif de pression (4) est conçu de plus de manière à ce qu'il puisse se mouvoir en va-et-vient dans la direction radiale, par rapport au rotor ou au stator (1).

12. Dispositif selon l'une des revendications 8 à 11,
**caractérisé en ce que**
celui-ci présente deux dispositifs de pression (4), qui sont disposés chacun sur une faces frontale du rotor ou du stator (1) et qui peuvent être mus par rapport à celui-ci dans la direction radiale et / ou circonférentielle, en particulier dans le sens de rotation du rotor ou du stator (1).

13. Dispositif selon l'une des revendications 8 à 12,
**caractérisé en ce que** le
dispositif de pression (4) présente une surface de contact (4a) avec laquelle les enroulements ondulés (2c) à introduire entrent en contact lors de l'introduction des enroulements ondulés (2c).

14. Dispositif selon la revendication 13,
**caractérisé en ce que**
la surface de contact (4a) présente une pluralité de sections courbées (A, B, C).

15. Dispositif selon la revendication 14,
**caractérisé en ce qu'**
une première section de courbure (C) de la surface de contact (4a), située en arrière dans la direction de rotation du stator ou du rotor (1), présente une ligne courbe, complémentaire de la ligne circulaire, qui est décrite par le cercle enveloppant de la couche supérieure de l'enroulement ondulé, complètement introduit.

16. Dispositif selon revendication 14 ou 15,
**caractérisé en ce qu'**
une deuxième partie de la courbure (A) de la surface de contact (4a) située en avant dans la direction de rotation du rotor ou du stator (1) présente une ligne courbe, qui s'étend essentiellement parallèlement à une courbure déterminée à partir de points, les points étant les points d'intersection (8) de cercles et de droites, sachant que
i) le rayon des cercles (6) est déterminé à partir d'une étape d'enroulement (T) de la natte d'enroulement ondulé (2) et le centre du cercle est déterminé par la position de la partie de fil passante (2a) de l'enroulement ondulé correspondant (2c),
ii) la droite correspond à la perpendiculaire centrale (7) des interstices (1b) du rotor ou du stator (1), qui s'étendent dans la direction radiale du rotor ou du stator (1).

17. Dispositif selon la revendication 15 ou 16,
**caractérisé en ce qu'**
une troisième section de courbure (B) de la surface de contact (4a) est disposée entre la première et la deuxième section de courbure (A, C), dont la ligne courbe est une interpolation constante de la première et de la deuxième section de courbure (A, C).

18. Dispositif selon l'une des revendications 8 à 16,
**caractérisé en ce que**
les éléments de séparation individuelle de fils (3a) présentent des parties élargies, qui sont plus larges que la face frontale des dents polaires (1a) du rotor ou du stator (1) et qui sont dimensionnées pour recevoir et particulièrement pour maintenir, entre eux et les dents polaires (1a), les bords frontaux d'un moyen d'isolation de rainure (9), en particulier en forme de film d'isolation de rainure u de papier d'isolation de rainure.
